# EUROPÄISCHE PATENTSCHRIFT

(11) **EP 2 407 265 B1**
(45) Veröffentlichungstag und Bekanntmachung des Hinweises auf die Patenterteilung: **08.01.2020**
(21) Anmeldenummer: 10007428.5
(22) Anmeldetag: 17.07.2010
(51) Int. Cl.: B23G 7/00, B23G 7/02, B27M 3/00, E04C 2/12

(54) **Werkzeug zum Einbringen eines Innengewindes, Verfahren zum Herstellen eines Holzverbundes mit einem derartigen Werkzeug und mit einem derartigen Verfahren hergestellte Holzwand**
Tool for forming an internal thread, method for producing a wood assembly with such a tool and wood assembly produced using such a method
Outil pour la production d'un filetage intérieur, procédé de fabrication d'un ensemble en bois à l'aide d'un tel outil et paroi en bois fabriquée à l'aide d'un tel procédé

(43) Veröffentlichungstag der Anmeldung: 18.01.2012
(73) Patentinhaber: Rombach, Rolf, 77784 Oberharmersbach (DE)
(72) Erfinder: Rombach, Rolf, 77784 Oberharmersbach (DE)
(74) Vertreter: RACKETTE Patentanwälte PartG mbB

(56) Entgegenhaltungen:
- EP-A1- 1 764 518
- EP-A1- 2 279 839
- DE-A1- 10 002 756
- FR-A1- 2 788 569
- GB-A- 2 073 655
- US-A- 5 795 120
- US-A1- 2009 215 544
- DATABASE WPI Week 197644 Thomson Scientific, London, GB; AN 1976-K6144X XP002613620, -& SU 492 389 A (IVANOV FURNITURE) 22. Januar 1976 (1976-01-22)

## Beschreibung

Die Erfindung betrifft ein Werkzeug zum Einbringen eines Innengewindes in wenigstens ein eine zylindrische Ausnehmung aufweisendes Holzelement gemäß dem Oberbegriff des Patentanspruchs 1.

Die Erfindung betrifft weiterhin ein Verfahren zum Herstellen eines mehrere Holzelemente aufweisenden Holzverbundes mit einem derartigen Werkzeug.

Die Erfindung betrifft weiterhin eine Holzwand mit einer Anzahl von flächigen Holzelementen gemäß dem Oberbegriff des Patentanspruchs 9.

Aus EP 1 764 518 A1 ist ein derartiges Werkzeug zum Einbringen eines Innengewindes in wenigstens ein eine zylindrische Ausnehmung aufweisendes Holzelement bekannt, das über einen Schaftabschnitt zum drehfesten Verbinden mit einem Drehantrieb und über wenigstens einen eine Außengewindestruktur aufweisenden Verdrängerabschnitt verfügt, der zum Verdrängen von Holzmaterial in dem oder jedem Holzelement eingerichtet ist. Der Verdrängerabschnitt ist in axialer Richtung mit gleichbleibenden Querschnitt ausgebildet und weist eine spiralförmige Schraubenstruktur mit spitzwinklig aufeinander zulaufenden Schrägwänden auf. Weiterhin lehrt dieses Dokument eine derartige Holzwand mit einer Anzahl von flächigen Holzelementen, mit einer Anzahl von Ausnehmungen in den Holzelementen und mit einer Anzahl von Vollholzschrauben, die in jeweils einer Ausnehmung eingedreht sind, sowie ein Verfahren zum Herstellen eines mehrere Holzelemente aufweisenden Holzverbundes. EP 1 764 518 A1 offenbart ebenfalls eine Holzwand mit den Merkmalen des Oberbegriffs des unabhängigen Anspruchs 9.

Aus US-A-5,795,120 ist eine Schraube bekannt, die eine Anzahl von Hauptgewindegängen mit einem im Wesentlichen gleichen Außendurchmesser, einen Formgewindegang mit einem gegenüber dem Außendurchmesser der Hauptgewindegänge größeren Außendurchmesser und eine Anzahl von Anlaufgewindegängen mit gegenüber dem Außendurchmesser der Hauptgewindegänge kleineren Außendurchmessern aufweist, mit der mit verhältnismäßig geringer Reibung in einem Material wie beispielsweise Holz ein Gewinde einformbar ist.

Aus US 2009/0215544 A1 ist ein sich selbst ausrichtender Gewindeschneider mit einem im Durchmesser gegenüber einem Schneidabschnitt verringerten glattwandigen Führungsabschnitt bekannt.

Aus DE 100 02 756 A1 ist ein Gewindefurcher mit einer Anzahl von identischen, jeweils einen Anlaufkegel und ein Führungsteil aufweisenden Gewindeabschnitten bekannt, wobei der jeweils vorderste Gewindeabschnitt nach Verschleiß abtrennbar ist. Dadurch lässt sich bei diesem Gewindefurcher mit sukzessivem Abtrennen von Gewindeabschnitten eine hohe Standzeit erzielen.

Aus dem nachveröffentlichten Dokument EP 2 279 839 A1 ist ein Holzflächenelement mit einer Anzahl von Holzelementlagen bekannt, die mit in Ausnehmungen einschraubbaren Vollholzschrauben miteinander verbindbar sind. Die Ausnehmungen und die Vollholzschrauben weisen in Längsrichtung sich verändernde Steigungen auf.

Der Erfindung liegt die Aufgabe zugrunde, ein Werkzeug zum Einbringen eines Innengewindes in wenigstens ein eine zylindrische Ausnehmung aufweisendes Holzelement anzugeben, mit dem mit kurzen Bearbeitungszeiten verhältnismäßig lange Gewindeabschnitte mit einem relativ großen Durchmesser ausbildbar sind.

Der Erfindung liegt weiterhin die Aufgabe zugrunde, ein Verfahren zum Herstellen eines mehrere Holzelemente aufweisenden Holzverbundes anzugeben, mit dem sich unter Einsatz eines erfindungsgemäßen Werkzeuges in verhältnismäßig kurzen Bearbeitungszeiten insbesondere auch relativ dicke Holzverbünde herstellen lassen.

Der Erfindung liegt weiterhin die Aufgabe zugrunde, eine Holzwand mit einer Anzahl von flächigen Holzelementen anzugeben, die sich durch eine relativ einfache Herstellung auszeichnet.

Die auf ein Werkzeug ausgerichtete Aufgabe wird erfindungsgemäß durch ein Werkzeug mit den Merkmalen des Patentanspruches 1 gelöst.

Die auf das Verfahren ausgerichtete Aufgabe wird erfindungsgemäß mit einem Verfahren mit den Merkmalen des Patentanspruches 7 gelöst.

Die auf eine Holzwand ausgerichtete Aufgabe wird erfindungsgemäß mit den Merkmalen des Patentanspruches 9 gelöst.

Dadurch, dass bei dem erfindungsgemäßen Werkzeug ein eine Au-ßengewindestruktur aufweisender Verdrängerabschnitt vorhanden ist, lässt sich in eine zylindrische Ausnehmung spanfrei durch Verdrängen ein Innengewinde einbringen, in das anschließend mit einem verhältnismäßig geringen Drehmoment insbesondere eine Vollholzschraube einschraubbar ist. Dadurch lassen sich insbesondere auch dicke Holzverbünde wie im Hausbau einsetzbare Holzwände verhältnismäßig kostengünstig und aufgrund des rein materialverdrängenden, spanfreien Einbringens einer Innengewindestruktur insbesondere auch werkzeugseitig wenig aufwendig herstellen, wobei bei Eindrehen der Vollholzschrauben materialbedingt ausbrechende Späne reibungsmindernd in den Aufnahmeräumen Platz finden.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung.

Es zeigen:
- Fig. 1: in einer perspektivischen Ansicht einen Ausschnitt aus einer Holzwand als Beispiel eines Holzverbundes, der bei diesem Ausführungsbeispiel aus fünf flächigen Holzelementen aufgebaut ist, die miteinander verbunden sind, sowie einen Holzbohrer zum Einbringen einer zylindrischen Ausnehmung in den Holzverbund,
- Fig. 2: in einer Schnittansicht ein Holzverbund gemäß Fig. 1 nach Einbringen der Ausnehmung,
- Fig. 3: in einer perspektivischen Ansicht den Holzverbund gemäß Fig. 1 mit einem Ausführungsbeispiel eines erfindungsgemäßen Werkzeuges zum Einbringen einer Innengewindestruktur in die Ausnehmung,
- Fig. 4: in einer Seitenansicht das Ausführungsbeispiel eines erfindungsgemäßen Werkzeuges gemäß Fig. 3,
- Fig. 5: in einer Seitenansicht ein weiteres Ausführungsbeispiel eines erfindungsgemäßen Werkzeuges,
- Fig. 6: in einer Schnittansicht den Holzverbund gemäß Fig. 1 nach Einbringen der Innengewindestruktur,
- Fig. 7: in einer perspektivischen Ansicht den Holzverbund gemäß Fig. 1 mit einer Vollholzschraube,
- Fig. 8: in einer Schnittansicht den Holzverbund gemäß Fig. 1 nach Eindrehen der Vollholzschraube und
- Fig. 9: in einer gegenüber einem Maßstab von Fig. 8 vergrößerten Schnittansicht ein Holzelement mit einem Abschnitt der eingedrehten Vollholzschraube.

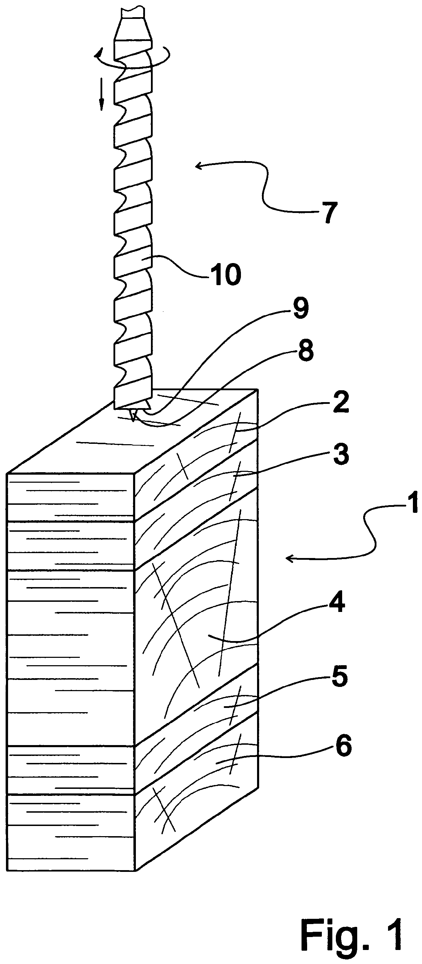

Fig. 1 zeigt in einer perspektivischen Ansicht einen Ausschnitt aus einer Holzwand 1 als Beispiel eines Holzverbundes, die als Holzelemente aus einem Weichholz wie insbesondere Tanne oder Fichte eine Decklage 2, eine auf einer Seite der Decklage 2 angeordnete Zwischenlage 3, eine auf der der Decklage 2 abgewandten Seite der Zwischenlage 3 angeordnete Innenlage 4, eine auf der anderen Seite der Innenlage 4 angeordnete weitere Zwischenlage 5 und eine Abschlusslage 6 aufweist, die auf der der Innenlage 4 abgewandten Seite der weiteren Zwischenlage 5 angeordnet ist. Die Decklage 2, die Zwischenlage 3, die Innenlage 4, die weitere Zwischenlage 5 und die Abschlusslage 6 sind beispielsweise mit in Fig. 1 nicht dargestellten Presseinheiten in Bezug aufeinander unverschiebbar aneinander gepresst.

Weiterhin ist in Fig. 1 ein Holzbohrer 7 dargestellt, der mit einem in Fig. 1 nicht dargestellten Drehantrieb verbunden sowie über diesen drehbar ist und über eine dornartige Zentrierspitze 8 verfügt, die nach Aufsetzen auf die der Zwischenlage 3 abgewandten Seite der Decklage 2 den Holzbohrer 7 zentriert, so dass nach Eindringen einer im Bereich der Zentrierspitze 8 ausgebildeten Schneidkante 9 der Holzbohrer 7 unter Abfuhr von Holzmaterial über einen Austragabschnitt 10 in die Holzwand 1 versenkbar ist.

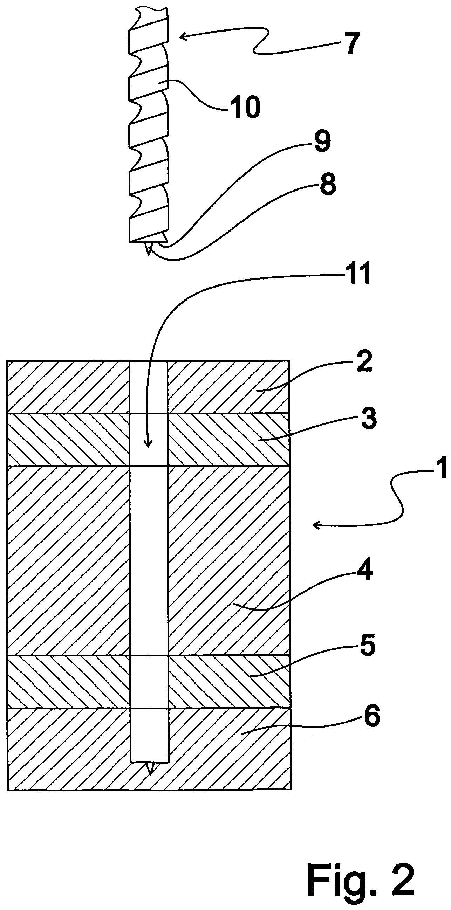

Fig. 2 zeigt in einer Schnittansicht die Holzwand 1 und den Holzbohrer 7 nach Eindringen des Holzbohrers 7 in sowie Herausziehen aus der Decklage 2, der Zwischenlage 3, der Innenlage 4, der weiteren Zwischenlage 5 und der Abschlusslage 6. Wie aus Fig. 2 ersichtlich ist, weist die Holzwand 1 nunmehr eine glattwandige, hier als Sackloch 11 ausgebildete Ausnehmung auf, das die Decklage 2, die Zwischenlage 3, die Innenlage 4 sowie die weitere Zwischenlage 5 durchdringt und in der Abschlusslage 6 endet.

Bei einem abgewandelten, nicht dargestellten Ausführungsbeispiel ist die Ausnehmung durchgehend.

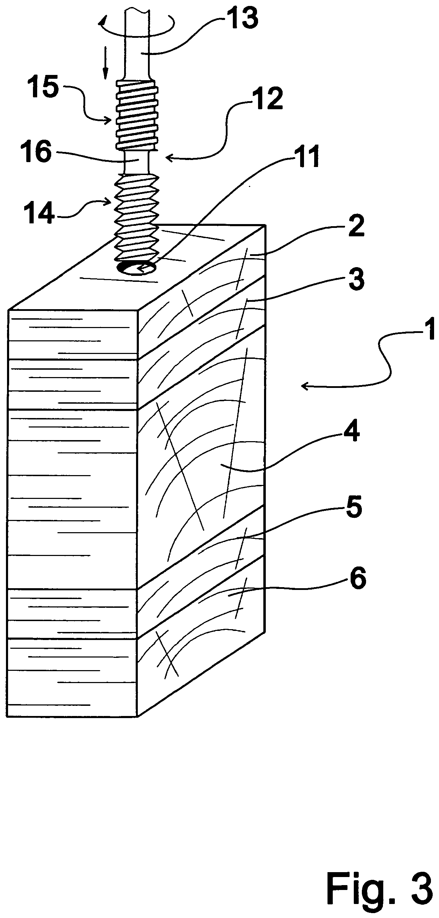

Fig. 3 zeigt in einer perspektivischen Ansicht die Holzwand 1 gemäß Fig. 1 mit dem Sackloch 11 und einen aus Metall, insbesondere Stahl, hergestellten Verdrängerkopf 12 eines beispielhaften erfindungsgemäßen Werkzeuges. Der Verdrängerkopf 12 ist an einem Schaftabschnitt 13 angebracht, wobei der Schaftabschnitt 13 mit einer weiteren, in Fig. 3 nicht dargestellten Antriebseinheit gekoppelt ist, um den Verdrängerkopf 12 zur Drehung anzutreiben. Der Verdrängerkopf 12 verfügt an seinem dem Schaftabschnitt 13 abgewandten Ende über einen eine Außengewindestruktur aufweisenden Verdrängerabschnitt 14, während er an seinem dem Schaftabschnitt 13 zugewandten Ende mit einem Nachformabschnitt 15 ausgebildet ist, der ebenfalls eine Außengewindestruktur aufweist. Zwischen dem Verdrängerabschnitt 14 und dem Nachformabschnitt 15 ist ein von einer Außengewindestruktur freier glattwandiger Zwischenabschnitt 16 vorhanden.

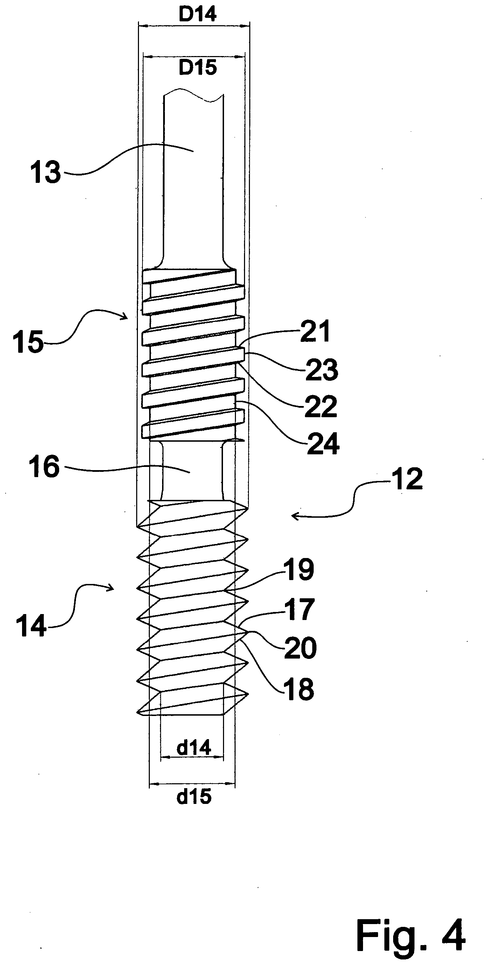

Fig. 4 zeigt den Verdrängerkopf 12 des beispielhaften Werkzeuges gemäß Fig. 4 in einer gegenüber dem Maßstab von Fig. 3 vergrößerten Seitenansicht. Aus Fig. 4 ist ersichtlich, dass die Außengewindestruktur des Verdrängerabschnittes 14 durch eine erste Schrägflanke 17 und eine zweite Schrägflanke 18 gebildet ist, die ausgehend von einem spiralförmig gewendelten, keilförmig ausgebildeten Keilnutgrund 19 schräg aufeinander zu laufen und in einer ebenfalls spiralförmig gewendelten, zwischen den Windungen des Keilnutgrundes 19 liegenden spiralförmigen Außenkante 20 zusammenlaufen. Dadurch ist die Außengewindestruktur des Verdrängerabschnittes 14 bei diesem Ausführungsbeispiel dreiecksförmig ausgestaltet.

Die Außengewindestruktur des Nachformabschnittes 15 verfügt über eine erste Schrägwand 21, die gegenüber den Schrägflanken 17, 18 des Verdrängerabschnittes 14 in Bezug auf die Längsachse des Verdrängerkopfes 12 wesentlich steiler angestellt sind. Die Schrägwände 21, 22 sind beidseitig einer parallel zu der Längsrichtung des Verdrängerkopfes 12 ausgerichteten, spiralförmig gewendelten Außenfläche 23 angeordnet, wobei sich zwischen den der Außenfläche 23 abgewandten Enden der Schrägwände 21, 22 ein ebenfalls parallel zu der Längsrichtung des Verdrängerkopfes 12 ausgerichteter flacher Flachnutgrund 24 erstreckt. Somit ist die Außengewindestruktur des Nachformabschnittes 15 trapezartig ausgebildet.

Weiterhin lässt sich der Darstellung gemäß Fig. 4 entnehmen, dass der Innendurchmesser d14 der Außengewindestruktur des Verdrängerabschnittes 14 kleiner als der Innendurchmesser d15 der Außengewindestruktur des Nachformabschnittes 15 ist, während der Außendurchmesser D14 der Außengewindestruktur des Verdrängerabschnittes 14 größer als der Außendurchmesser D15 der Außengewindestruktur des Nachformabschnittes 15 ist. Der Durchmesser des glattwandigen Zwischenabschnittes 16 ist vorzugsweise kleiner als, höchstens jedoch so groß wie der Innendurchmesser d14 der Außengewindestruktur des Verdrängerabschnittes 14, wobei die Länge des Zwischenabschnittes 16 in Längsrichtung des Verdrängerkopfes 12 so eingerichtet ist, dass die jeweils gleiche Steigungen aufweisenden Außengewindestrukturen des Verdrängerabschnittes 14 und des Nachformabschnittes 15 bei gedachtem Fortsetzen der Außengewindestrukturen mit gleicher Steigung sprungfrei ineinander übergehen. Der Innendurchmesser d15 der Außengewindestruktur des Nachformabschnittes 15 entspricht im wesentlichen dem Innendurchmesser des Sackloches 11.

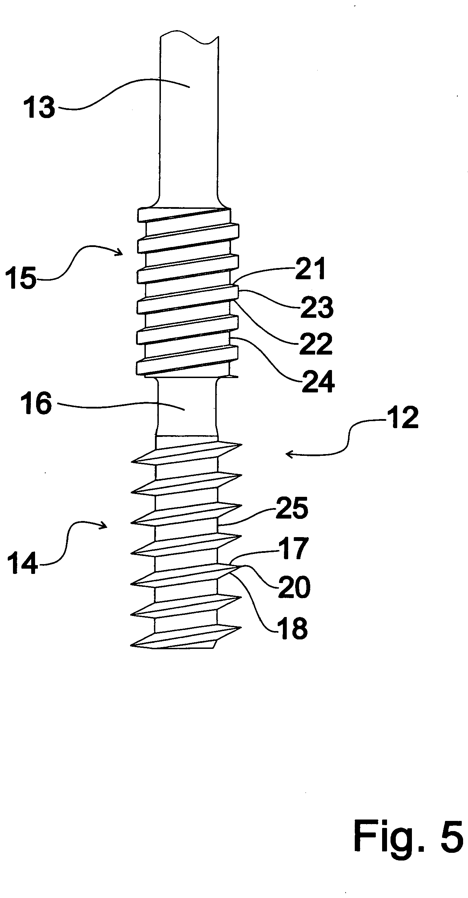

Fig. 5 zeigt in einer Seitenansicht entsprechend der Darstellung gemäß Fig. 4 ein weiteres Ausführungsbeispiel eines Verdrängerkopfes 12 eines beispielhaften erfindungsgemäßen Werkzeuges, bei dem gegenüber dem Ausführungsbeispiel gemäß Fig. 4 die Außengewindestruktur des Verdrängerabschnittes 14 abgewandelt ist. Bei der Ausführung gemäß Fig. 5 ist anstelle des Keilnutgrundes 19 wie bei dem Ausführungsbeispiel gemäß Fig. 4 zwischen den gegenüber dem Ausführungsbeispiel gemäß Fig. 4 steiler angestellten Schrägflanken 17, 18 ein parallel zu der Längsrichtung des Verdrängerkopfes 12 ausgerichteter Flachnutgrund 25 ausgebildet, wobei die Schrägflanken 17, 18 der Außengewindestruktur des Verdrängerabschnittes 14 weiterhin weniger steil als die Schrägwände 21, 22 der Außengewindestruktur des Nachformabschnittes 15 angestellt sind.

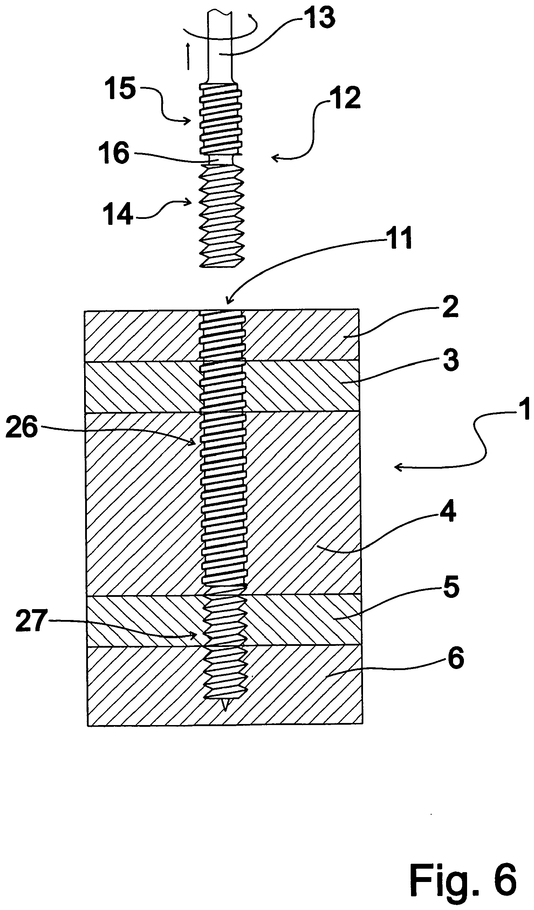

Fig. 6 zeigt in einer Schnittansicht die Holzwand 1 gemäß Fig. 1 nach Ausdrehen des Verdrängerkopfes 12. In dem Sackloch 11 sind nunmehr eine erste Innengewindestruktur 26 und eine zweite Innengewindestruktur 27 eingebracht, wobei sich die zweite Innengewindestruktur 27 über die Länge des Verdrängerabschnittes 14 und sich die erste Innengewindestruktur 26 über den übrigen Bereich des Sackloches 11 erstreckt. Die zweite Innengewindestruktur 27 ist komplementär zu der Außengewindestruktur des Verdrängerabschnittes 14 ausgebildet, während die erste Innengewindestruktur 26 eine zu der Außengewindestruktur des Nachformabschnittes 15 komplementäre Gestalt hat.

Die Innengewindestrukturen 26, 27 sind spanfrei allein durch Verdrängen des Materiales der Decklage 2, der Zwischenlage 3, der Innenlage 4, der weiteren Zwischenlage 5 und der Abschlusslage 6 eingebracht. Dabei übernimmt der Verdrängerabschnitt 14 aufgrund seiner Keilform mit größerem Außendurchmesser mit seiner Außengewindestruktur das Verdrängen des Holzmateriales im Außenbereich, während die Außengewindestruktur des Nachformabschnittes 15 die bereits durch den Verdrängerabschnitt 14 ursprünglich ausgebildete zweite Innengewindestruktur 27 nachformt.

Durch den gegenüber dem Innendurchmesser des Sackloches 11 kleineren Innendurchmesser d14 des Verdrängerabschnittes 14 besteht lediglich im Bereich der Schrägflanken 17, 18 ein Kontakt mit dem Holzmaterial, so dass eine selbsttätige Selbstzentrierung mit einer verhältnismäßig geringen Reibungskraft sichergestellt ist. Erst der Nachformabschnitt 15 formt über den größeren Teil der Länge des Sackloches 11 ein, wie weiter unten näher erläutert, zu einer einzuschraubenden Vollholzschraube komplementäre Innengewindestruktur ebenfalls durch Verdrängen, dann allerdings im Vergleich zu dem Verdrängerabschnitt 14 wesentlich kleinvolumiger, aus.

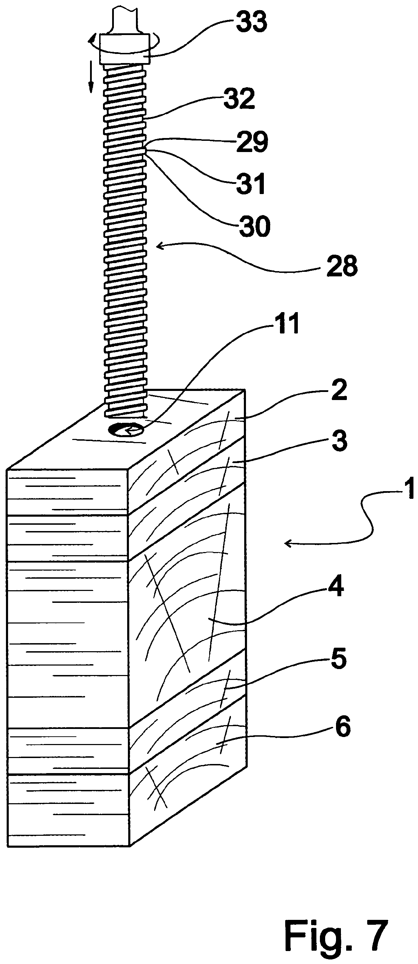

Fig. 7 zeigt in einer perspektivischen Ansicht die Holzwand 1 gemäß Fig. 1 nach Einbringen der Innengewindestrukturen 26, 27 und eine stangenartige aus einem Hartholz wie insbesondere Buche gefertigte, vorzugsweise getrocknete Vollholzschraube 28 mit einer gegenüber der Restfeuchte der Holzelemente 2, 3, 4, 5, 6 der Holzwand 1 geringeren Restfeuchte, die eine der Außengewindestruktur des Nachformabschnittes 15 des Verdrängerkopfes 12 entsprechende Außengewindestruktur mit verhältnismäßig steil angestellten Schrägwänden 29, 30, einer Außenfläche 31 sowie einem Flachnutgrund 32, die jeweils parallel zu der Längsachse der Vollholzschraube 28 ausgerichtet sind, aufgebaut ist. Die Vollholzschraube 28 ist mit einem Ende drehfest aber lösbar in einem Spannfutter 33 gehalten, das wiederum mit einer Dreheinheit zum Drehen des Spannfutters 33 verbunden ist, die in Fig. 7 nicht dargestellt ist. Durch Drehen und Absenken der Vollholzschraube 28 in das Sackloch 11 ist diese nach Eingriff ihrer Außengewindestruktur mit der ersten Innengewindestruktur 26 jedenfalls gegenüber einem Sackloch 11 mit einer glatten gewindefreien Außenwand mit einem verhältnismäßig geringen Drehmoment in das Sackloch 11 eindrehbar.

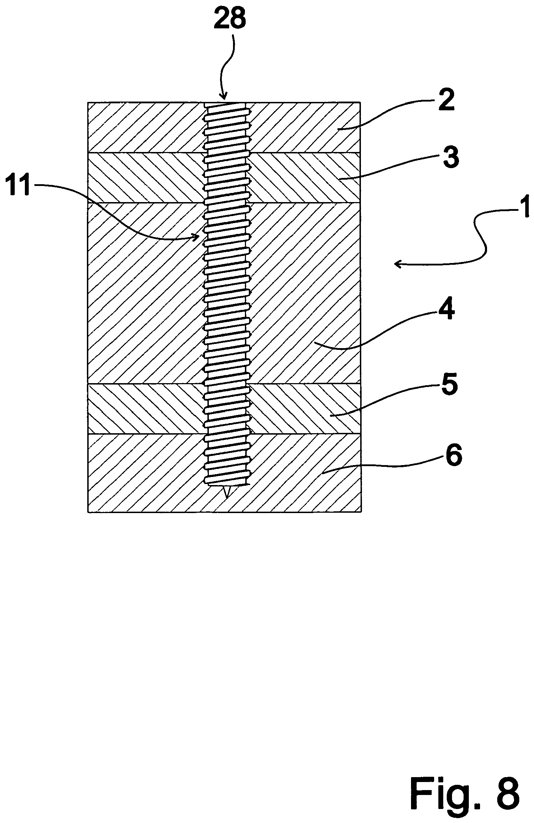

Fig. 8 zeigt in einer Schnittansicht die Holzwand 1 gemäß Fig. 1 nach Eindrehen der Vollholzschraube 28 in das Sackloch 11. Aus Fig. 8 ist ersichtlich, dass sich die Vollholzschraube 28 über die gesamte Länge des Sackloches 11 von der Decklage 2 durch die Zwischenlage 3, die Innenlage 4 und die weitere Zwischenlage 5 hindurch bis in die Abschlusslage 6 erstreckt, so dass diese nunmehr fest miteinander verbunden sind.

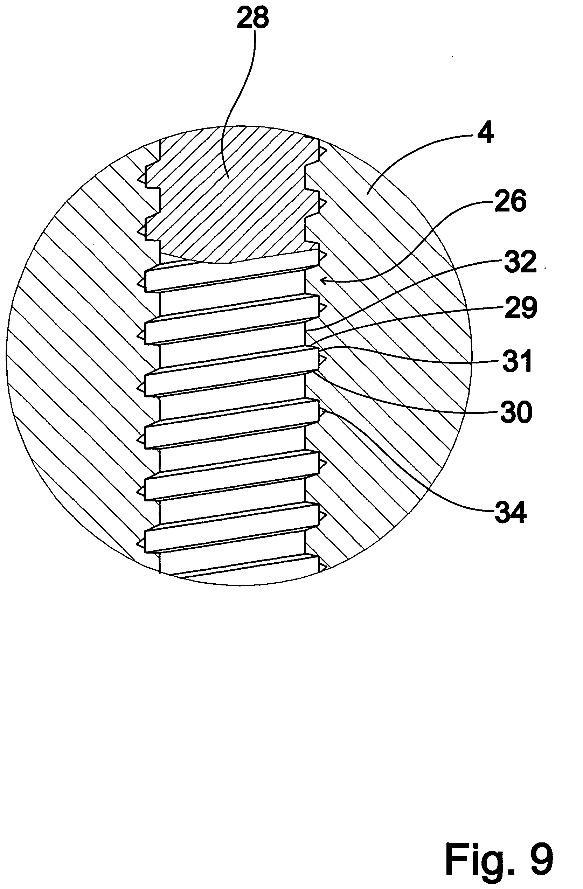

Fig. 9 zeigt in einer Schnittansicht mit einem gegenüber der Darstellung gemäß Fig. 8 vergrößerten Maßstab die teilgeschnitten dargestellte Vollholzschraube 28 in der in die Innenlage 4 eingeschraubten Anordnung. Aus Fig. 9 ist besonders deutlich ersichtlich, dass die Außengewindestruktur der Vollholzschraube 28 und die erste Innengewindestruktur 26 formschlüssig miteinander in Eingriff sind, so dass die Vollholzschraube 28 mit einer sehr hohen Auszugskraft verankert ist. Bei einer Aufnahme von Feuchtigkeit quillt die getrocknete Vollholzschraube 28 auf und erhöht damit die Festigkeit ihres Sitzes. Weiterhin lässt sich der Darstellung gemäß Fig. 9 entnehmen, dass auf den radial nach außen weisenden Seiten der Außenfläche 31 der Vollholzschraube 28 durch das bezüglich der Außengewindestruktur der Vollholzschraube 28 vorhandene Übermaß im Außendurchmesser D14 der Außengewindestruktur des Verdrängerabschnittes 14 des Verdrängerkopfes 12 ein im Querschnitt dreiecksartiger, spiralförmig gewendelter Aufnahmeraum 34 ausgebildet ist, der beispielsweise zur Aufnahme von materialbedingt ausbrechenden Spänen dient, die dann die Reibung zwischen der Vollholzschraube 28 und den Innengewindestrukturen 26, 27 des Sackloches 11 nicht über Maßen erhöhen.

Aus vorstehend erläuterten Holzelementen 2, 3, 4, 5, 6 aufgebaute Holzverbünde 1 sind erfindungsgemäß auch als vollständig aus Holzmaterial hergestellte Holzwände mit einer Anzahl von Vollholzschrauben 28 ausgebildet, die in als Sacklöcher 11 ausgebildete Ausnehmungen und/oder in durchgehende Ausnehmungen eingeschraubt sind.

## Patentansprüche

1. Werkzeug zum Einbringen eines Innengewindes (26, 27) in wenigstens ein eine zylindrische Ausnehmung (11) aufweisendes Holzelement (2, 3, 4, 5, 6) mit einem Schaftabschnitt (13) zum drehfesten Verbinden mit einem Drehantrieb und mit wenigstens einem eine Außengewindestruktur aufweisenden Verdrängerabschnitt (14), der zum Verdrängen von Holzmaterial in dem oder jedem Holzelement (2, 3, 4, 5, 6) eingerichtet ist, **dadurch gekennzeichnet, dass** die Außengewindestruktur des Verdrängerabschnitts (14) dreiecksförmig ausgebildet ist, dass ein eine Außengewindestruktur aufweisender Nachformabschnitt (15) vorhanden ist, der zwischen dem Schaftabschnitt (13) und dem oder einem Verdrängerabschnitt (14) angeordnet ist, wobei die Außengewindestruktur des Nachformabschnittes (15) trapezartig mit einer planen Außenfläche (23) ausgebildet ist, und dass der Außendurchmesser (D15) der Außengewindestruktur des Nachformabschnittes (15) kleiner als der Außendurchmesser (D14) der Außengewindestruktur des oder jedes Verdrängerabschnittes (14) ist.

2. Werkzeug nach Anspruch 1, **dadurch gekennzeichnet, dass** der Innendurchmesser (d15) der Außengewindestruktur des Nachformabschnittes (15) größer als der Innendurchmesser (d14) der Außengewindestruktur des oder jedes Verdrängerabschnittes (14) ist.

3. Werkzeug nach Anspruch 1 oder Anspruch 2, **dadurch gekennzeichnet, dass** die oder eine Außengewindestruktur des Verdrängerabschnittes (14) zwei von einem Nutgrund (19, 25) schräg aufeinander zu laufende und in einer spiralförmigen Außenkante (20) zusammenlaufende Schrägflanken (17, 18) aufweist.

4. Werkzeug nach Anspruch 3, **dadurch gekennzeichnet, dass** der Nutgrund (19) keilförmig ist.

5. Werkzeug nach Anspruch 3, **dadurch gekennzeichnet, dass** der Nutgrund (25) eine plane Fläche aufweist.

6. Werkzeug nach einem der Ansprüche 1 bis 5, **dadurch gekennzeichnet, dass** zwischen dem Nachformabschnitt (15) und dem ihm benachbarten Verdrängerabschnitt (14) ein gewindefreier Zwischenabschnitt (16) ausgebildet ist, dessen Außendurchmesser höchstens so groß wie der Innendurchmesser (d14) der Außengewindestruktur des Verdrängerabschnittes (14) ist.

7. Verfahren zum Herstellen eines mehrere Holzelemente (2, 3, 4, 5, 6) aufweisenden Holzverbundes (1) mit einem Werkzeug nach einem der Ansprüche 1 bis 6 mit den Schritten
- schichtweises Aneinanderlegen der Holzelemente (2, 3, 4, 5, 6),
- Einbringen einer Ausnehmung (11) in die Holzelemente (2, 3, 4, 5, 6),
- Einbringen einer Innengewindestruktur (26, 27) in die Ausnehmung (11) mit dem Werkzeug und
- Eindrehen einer Vollholzschraube (28) in die mit der Innengewindestruktur (26, 27) ausgebildeten Ausnehmung (11).

8. Verfahren nach Anspruch 7, **dadurch gekennzeichnet, dass** die Vollholzschraube (28) eine Außengewindestruktur aufweist, die entsprechend der Außengewindestruktur des Nachformabschnittes (15) ausgebildet ist.

9. Holzwand mit einer Anzahl von flächigen, schichtweise aufeinander gelegten Holzelementen (2, 3, 4, 5, 6), mit einer Anzahl von Ausnehmungen (11) in den Holzelementen (2, 3, 4, 5, 6) und mit einer Anzahl von Vollholzschrauben (28), die in jeweils eine Ausnehmung (11) eingedreht sind, **dadurch gekennzeichnet, dass** bei der Anzahl von Ausnehmungen (11) die Ausnehmungen (11) unterschiedliche Innengewindestrukturen (26, 27) aufweisen, dass die Vollholzschrauben (28) mit einer Außengewindestruktur mit verhältnismäßig steil angestellten Schrägwänden (29, 30), einer Außenfläche (31) sowie einem Flachnutgrund (32), die jeweils parallel zu der Längsachse der Vollholzschraube (28) ausgerichtet sind, aufgebaut sind und dass auf den radial nach außen weisenden Außenflächen (31) der Vollholzschrauben (28) ein spiralförmig gewendelter, dreiecksartiger Aufnahmeraum (34) zur Aufnahme von ausbrechenden Spänen ausgebildet ist.

10. Holzwand nach Anspruch 9, **dadurch gekennzeichnet, dass** wenigstens eine Ausnehmung ein Sackloch (11) ist.

11. Holzwand nach Anspruch 9 oder Anspruch 10, **dadurch gekennzeichnet, dass** wenigstens eine Ausnehmung ein durchgehendes Loch ist.

## Claims

1. Tool for making an internal thread (26, 27) in at least one wooden element (2, 3, 4, 5, 6) having a cylindrical cut-out (11), said tool comprising a shaft portion (13) for rotational connection to a rotary drive and comprising at least one displacement portion (14) that has an external thread structure and that is designed to displace wooden material in the or each wooden element (2, 3, 4, 5, 6), **characterised in that** the external thread structure of the displacement portion (14) is designed to be triangular, **in that** a reshaping portion (15) is provided which has an external thread structure and is arranged between the shaft portion (13) and the or a displacement portion (14), the external thread structure of the reshaping portion (15) being designed to be trapezoidal having a planar outer surface (23), and **in that** the outer diameter (D15) of the external thread structure of the reshaping portion (15) is smaller than the outer diameter (D14) of the external thread structure of the or each displacement portion (14).

2. Tool according to claim 1, **characterised in that** the inner diameter (d15) of the external thread structure of the reshaping portion (15) is larger than the inner diameter (d14) of the external thread structure of the or each displacement portion (14).

3. Tool according to claim 1 or claim 2, **characterised in that** the or an external thread structure of the displacement portion (14) has two inclined flanks (17, 18) that extend obliquely towards one another from a groove base (19, 25) and converge in a spiral outer edge (20) .

4. Tool according to claim 3, **characterised in that** the groove base (19) is wedge-shaped.

5. Tool according to claim 3, **characterised in that** the groove base (25) has a planar surface.

6. Tool according to any of claims 1 to 5, **characterised in that** an unthreaded intermediate portion (16) is formed between the reshaping portion (15) and the adjoining displacement portion (14), the outer diameter of which intermediate portion is at most as large as the inner diameter (d14) of the external thread structure of the displacement portion (14).

7. Method for producing a wooden composite (1) having multiple wooden elements (2, 3, 4, 5, 6) using a tool according to any of claims 1 to 6, comprising the steps of
- placing the wooden elements (2, 3, 4, 5, 6) one on the other in layers,
- making a cut-out (11) in the wooden elements (2, 3, 4, 5, 6),
- making an internal thread structure (26, 27) in the cut-out (11) using the tool and
- screwing a solid-wood screw (28) into the cut-out (11) formed having the internal thread structure (26, 27).

8. Method according to claim 7, **characterised in that** the solid-wood screw (28) has an external thread structure that is formed so as to correspond to the external thread structure of the reshaping portion (15).

9. Wooden wall comprising a plurality of flat wooden elements (2, 3, 4, 5, 6) placed one on top of the other in layers, comprising a plurality of cut-outs (11) in the wooden elements (2, 3, 4, 5, 6) and comprising a plurality of solid-wood screws (28) that are screwed into one cut-out (11) each, **characterised in that**, with regard to the plurality of cut-outs (11), the cut-outs (11) have different internal thread structures (26, 27), **in that** the solid-wood screws (28) are composed of an external thread structure comprising relatively steep inclined walls (29, 30), an outer surface (31) and a flat groove base (32), which are all oriented in parallel with the longitudinal axis of the solid-wood screw (28), and **in that** a spirally wound, triangular receiving space (34) for receiving shavings that break off is formed on the radially outwardly pointing outer surfaces (31) of the solid-wood screws (28).

10. Wooden wall according to claim 9, **characterised in that** at least one cut-out is a blind hole (11).

11. Wooden wall according to claim 9 or claim 10, **characterised in that** at least one cut-out is a throughhole.

## Revendications

1. Outil pour la mise en place d'un taraudage (26, 27) dans au moins un élément en bois (2, 3, 4, 5, 6) présentant un évidement cylindrique (11), avec une section de tige (13) pour une liaison résistante à la torsion avec un entraînement en rotation et avec au moins une section de déplacement (14) présentant une structure de filetage mâle, ladite structure de filetage mâle étant disposée pour le déplacement de matériau de bois dans le ou chaque élément en bois (2, 3, 4, 5, 6), **caractérisé en ce que** la structure de filetage mâle de la section de déplacement (14) est formée de façon triangulaire, **en ce qu'**il existe une section de post-formage (15) présentant une structure de filetage mâle, ladite section de post-formage (15) étant disposée entre la section de tige (13) et la ou une section de déplacement (14), pour lequel la structure de filetage mâle de la section de post-formage (15) est formée de façon trapézoïdale avec une surface extérieure plane (23), et **en ce que** le diamètre extérieur (D15) de la structure de filetage mâle de la section de post-formage (15) est inférieur au diamètre extérieur (D14) de la structure de filetage mâle du ou de chaque section de déplacement (14).

2. Outil selon la revendication 1, **caractérisé en ce que** le diamètre intérieur (d15) de la structure de filetage mâle de la section de post-formage (15) est supérieure au diamètre intérieur (d14) de la structure de filetage mâle du ou de chaque section de déplacement (14).

3. Outil selon la revendication 1 ou la revendication 2, **caractérisé en ce que** la ou une structure de filetage mâle de la section de déplacement (14) présente deux flancs obliques (17, 18) s'inclinant l'un vers l'autre à partir d'un fond de rainure (19, 25) et convergeant en une arête extérieure (20) en forme de spirale.

4. Outil selon la revendication 3, **caractérisé en ce que** le fond de rainure (19) est en forme de coin.

5. Outil selon la revendication 3, **caractérisé en ce que** le fond de rainure (25) présente une surface plane.

6. Outil selon l'une des revendications 1 à 5, **caractérisé en ce qu'**est formée une section intermédiaire (16) sans filetage entre la section de post-formage (15) et la section de déplacement (14) voisine, le diamètre extérieur de ladite section intermédiaire étant au maximum aussi grand que le diamètre intérieur (d14) de la structure de filetage mâle de la section de déplacement (14).

7. Procédé pour la fabrication d'un composite en bois (1) comprenant plusieurs éléments en bois (2, 3, 4, 5, 6) avec un outil selon l'une des revendications 1 à 6 avec les étapes
- le positionnement l'un contre l'autre, couche par couche, des éléments en bois (2, 3, 4, 5, 6),
- la mise en œuvre d'un évidement (11) dans les éléments en bois (2, 3, 4, 5, 6),
- la mise en œuvre d'une structure de taraudage (26, 27) dans l'évidement (11) avec l'outil et
- le vissage d'une vis à bois massif (28) dans l'évidement (11) formé avec la structure de taraudage (26, 27).

8. Procédé selon la revendication 7, **caractérisé en ce que** la vis à bois massif (28) présente une structure de filetage mâle qui est formée conformément à la structure de filetage mâle de la section de post-formage (15).

9. Paroi en bois avec un certain nombre d'éléments en bois (2, 3, 4, 5, 6) plats disposés les uns sur les autres, couche par couche, avec un certain nombre d'évidements (11) dans les éléments de bois (2, 3, 4, 5, 6) et avec un certain nombre de vis à bois massif (28), lesdites vis à bois massif étant chacune vissée dans un évidement (11), **caractérisée en ce que** pour ce certain nombre d'évidements (11), les évidements (11) présentent des structures de taraudage (26, 27) différentes, **en ce que** les vis à bois massif (28) sont constituées avec une structure de filetage mâle avec des parois inclinées (29, 30) disposées de façon relativement raide, avec une surface extérieure (31) ainsi qu'un fond de gorge (32) plat, chacun étant formé parallèlement à l'axe longitudinal de la vis à bois massif (28), et **en ce qu'**un espace de réception (34) de forme triangulaire et enroulé en forme de spirale est formé sur les surfaces extérieures (31) orientées radialement vers l'extérieur des vis à bois massif (28) de façon à recevoir des copeaux en train d'être évacués.

10. Paroi en bois selon la revendication 9, **caractérisée en ce qu'**au moins un évidement est un trou borgne (11).

11. Paroi en bois selon la revendication 9 ou la revendication 10, **caractérisée en ce qu'**au moins un évidement est un trou traversant.
